# EUROPEAN PATENT APPLICATION

(11) **EP 4 773 681 A1**
(43) Date of publication of application: **08.07.2026**
(21) Application number: 24858525.9
(22) Date of filing: 26.08.2024
(51) Int. Cl.: H04W 52/02

(54) **NETWORK REGISTRATION METHOD AND APPARATUS, ELECTRONIC DEVICE, AND STORAGE MEDIUM**

(30) Priority: 30.08.2023 CN 202311112770
(71) Applicant: Vivo Mobile Communication Co., Ltd., Dongguan, Guangdong 523863 (CN)
(72) Inventor: ZHANG, Jiayong, Dongguan, Guangdong 523863 (CN)
(74) Representative: Murgitroyd & Company
(86) International application number: PCT/CN2024/114567
(87) International publication number: WO 2025/044989

(57) **Abstract**

This application discloses a network registration method and apparatus, an electronic device, and a storage medium, and pertains to the field of communication technologies. The method includes: obtaining first registration information of a SIM card of an electronic device within second duration in a case that the SIM card of the electronic device fails to be registered with a network within first duration, where the first registration information represents whether the SIM card of the electronic device is rejected by a first network and a second network within the second duration; and performing a registration-related operation based on first information in a case that the SIM card of the electronic device is not rejected by the first network and is rejected by the second network within the second duration, where the first information includes a quantity of times that the SIM card of the electronic device is rejected by the second network during network registration.

## Description

### CROSS-REFERENCE TO RELATED APPLICATIONS

This application claims priority to Chinese Patent Application No. 202311112770.0, filed with the China National Intellectual Property Administration on August 30, 2023 and entitled "NETWORK REGISTRATION METHOD AND APPARATUS, ELECTRONIC DEVICE, AND STORAGE MEDIUM", which is incorporated herein by reference in its entirety.

### TECHNICAL FIELD

This application pertains to the field of communication technologies, and specifically relates to a network registration method and apparatus, an electronic device, and a storage medium.

### BACKGROUND

When an electronic device is located in a region with 2G or 3G network coverage, if a subscriber identity module (Subscriber Identity Module, SIM) card of each operator used in the electronic device is an abnormal card, for example, a card in arrears or a card without roaming activated, the electronic device is rejected by a network during registration with the network. After a plurality of rejections, the SIM card becomes an invalid card. In this case, the electronic device provides only an emergency service. As such, the electronic device does not make a plurality of attempts to register with the network, so that no additional power consumption is caused due to frequent registration with the network.

However, with the coverage of 4G or 5G networks, 2G or 3G networks have been decommissioned in some regions currently. When an electronic device is located in a region without 2G or 3G network coverage, because the electronic device cannot be rejected by a 2G or 3G network, that is, a SIM card of the electronic device does not become an invalid card, the electronic device still attempts to register with a network even if the SIM card of the electronic device is an abnormal card. A 4G or 5G network does not reject registration of the electronic device that uses the abnormal card. As such, the electronic device keeps attempting to register with the network, causing high power consumption. Consequently, a battery life of the electronic device is relatively short when the abnormal card is used in the region without 2G or 3G network coverage.

### SUMMARY

An objective of embodiments of this application is to provide a network registration method and apparatus, an electronic device, and a storage medium, to resolve a problem that a battery life of an electronic device is relatively short when an abnormal card is used in a region without 2G or 3G network coverage.

According to a first aspect, an embodiment of this application provides a network registration method. The method includes: obtaining first registration information of a SIM card of an electronic device within second duration in a case that the SIM card of the electronic device fails to be registered with a network within first duration, where the first registration information represents whether the SIM card of the electronic device is rejected by a first network and a second network within the second duration; and performing a registration-related operation based on first information in a case that the SIM card of the electronic device is not rejected by the first network and is rejected by the second network within the second duration, where the first information includes a quantity of times that the SIM card of the electronic device is rejected by the second network during network registration.

According to a second aspect, an embodiment of this application provides a network registration apparatus. The network registration apparatus includes an obtaining module and an execution module. The obtaining module is configured to obtain first registration information of a SIM card of an electronic device within second duration in a case that the SIM card of the electronic device fails to be registered with a network within first duration, where the first registration information represents whether the SIM card of the electronic device is rejected by a first network and a second network within the second duration. The execution module is configured to perform a registration-related operation based on first information in a case that the SIM card of the electronic device is not rejected by the first network and is rejected by the second network within the second duration, where the first information includes a quantity of times that the SIM card of the electronic device is rejected by the second network during network registration.

According to a third aspect, an embodiment of this application provides an electronic device. The electronic device includes a processor and a memory, the memory stores a program or instructions that are executable on the processor, and the program or the instructions are executed by the processor to implement the steps of the method according to the first aspect.

According to a fourth aspect, an embodiment of this application provides a readable storage medium. The readable storage medium stores a program or instructions, and the program or the instructions are executed by a processor to implement the steps of the method according to the first aspect.

According to a fifth aspect, an embodiment of this application provides a chip. The chip includes a processor and a communication interface, the communication interface is coupled to the processor, and the processor is configured to execute a program or instructions to implement the method according to the first aspect.

According to a sixth aspect, an embodiment of this application provides a computer program product. The program product is stored in a storage medium, and the program product is executed by at least one processor to implement the method according to the first aspect.

In embodiments of this application, the first registration information of the SIM card of the electronic device within the second duration is obtained in the case that the SIM card of the electronic device fails to be registered with a network within the first duration, to represent whether the SIM card of the electronic device is rejected by the first network and the second network; and the registration-related operation is performed based on the quantity of times of being rejected by the second network in the case that the SIM card of the electronic device is not rejected by the first network and is rejected by the second network. In this solution, in the case that the SIM card of the electronic device fails to be registered with a network, whether the SIM card is rejected by the first network may be determined to determine whether a region in which the electronic device is located currently is covered by the first network. To be specific, in a case that the SIM card is not rejected by the first network, it is determined that the region in which the electronic device is located currently is not covered by the first network. In addition, whether the SIM card is rejected by the second network is determined to determine whether the SIM card is an abnormal card. To be specific, in a case that the SIM card is rejected by the second network, it is determined that the region in which the electronic device is located currently is not a region without network coverage, but rejection is caused due to an anomaly of the SIM card. Thus, in a case that there is no coverage of the first network and the SIM card is an abnormal card, the registration-related operation is performed based on the quantity of times of being rejected by the second network. In other words, a network registration process of the SIM card is performed. Therefore, the abnormal card located in a region covered by the second network is prevented from keeping attempting registration with a network. Thus, this solution can reduce a quantity of unnecessary network registration times of the abnormal card of the electronic device, reduce power consumption of the electronic device, and improve a battery life of the electronic device.

### BRIEF DESCRIPTION OF DRAWINGS

FIG. 1 is a flowchart 1 of a network registration method according to an embodiment of this application;
FIG. 2 is a flowchart 2 of a network registration method according to an embodiment of this application;
FIG. 3 is a flowchart 3 of a network registration method according to an embodiment of this application;
FIG. 4 is a flowchart 4 of a network registration method according to an embodiment of this application;
FIG. 5 is a schematic diagram 1 of a structure of a network registration apparatus according to an embodiment of this application;
FIG. 6 is a schematic diagram 2 of a structure of a network registration apparatus according to an embodiment of this application;
FIG. 7 is a schematic diagram of a structure of an electronic device according to an embodiment of this application; and
FIG. 8 is a schematic diagram of a hardware structure of an electronic device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

It should be noted that the terms "first", "second", and the like in the specification and claims of this application are intended to distinguish between similar objects but do not necessarily indicate a specific order or sequence. It should be understood that, data used in this way may be interchangeable under appropriate circumstances, so that the embodiments of this application can be implemented in an order other than that illustrated or described herein. Moreover, the terms such as "first", "second", and the like typically distinguish between objects of one category rather than limiting a quantity of objects. For example, there may be one or more first objects. In addition, in the specification and claims, "and/or" represents at least one of the connected objects, and the character "/" usually represents an "or" relationship between associated objects.

The terms "at least one (item)", "at least one of", and the like in the specification and claims of this application refer to any one, any two, or a combination of any two or more of included objects. For example, at least one (item) of a, b, and c may represent: "a", "b", "c", "a and b", "a and c", "b and c", and "a, b, and c", where a, b, and c may be singular or plural. Similarly, "at least two (items)" means two or more, and a meaning thereof is similar to that of "at least one (item)".

A network registration method provided in the embodiments of this application is described below in detail by using specific embodiments and application scenarios thereof with reference to the accompanying drawings.

The embodiments of this application may be applied to a scenario of network registration, and specifically, may be applied to a scenario of registration with a non-2G/3G network. For example, the non-2G/3G network may be a 4G network or a 5G network. It may be understood that the embodiments of this application provide a scenario in which an electronic device attempts network registration in a region covered by a 4G network or a 5G network and not covered by a 2G network or a 3G network.

Currently, a sequence in which the electronic device searches for a network for registration is the 5G network, the 4G network, the 3G network, and the 2G network. If registration with the 4G network or the 5G network can succeed, the electronic device does not attempt to register with the 2G network or the 3G network. Only when registration with the 4G network or the 5G network cannot succeed, the electronic device searches for a network for registration on the 2G network or the 3G network. If a SIM card of the electronic device is an abnormal card and there is coverage of the 2G network or the 3G network, the 2G network or the 3G network may make a rejection by using a relatively serious cause (cause) value. After a plurality of rejections, the SIM card becomes an invalid (invalid) card, and the SIM card does not continue to search for a network for registration subsequently.

However, at present, the 2G network or the 3G network has been decommissioned in some regions. In these regions without 2G network or 3G network coverage, if the SIM card of the electronic device is an abnormal card, for example, a card in arrears or a card without roaming activated, when the SIM of the electronic device is registered with the 2G network or the 3G network, the SIM card is not rejected by the network by using a relatively serious cause value. Therefore, some abnormal cards still keep searching for a network for registration, for example, searching for a 2G network, a 3G network, a 4G network, and a 5G network for network registration, resulting in high power consumption of the electronic device, and consequently causing a relatively short battery life of the electronic device.

For example, an example in which the electronic device is a mobile phone is used for illustration. It is assumed that a SIM card of the mobile phone is a card in arrears. When the mobile phone is located in a region A, the mobile phone may perform network search and registration in the region A by using the SIM card. To be specific, the mobile phone first searches for a 5G network in the region A by using the SIM card to attempt network registration; if registration with the 5G network fails (for example, the 5G network is not found or the 5G network makes a rejection), the mobile phone continues to search for a 4G network in the region A by using the SIM card to attempt network registration; if registration with the 4G network fails (for example, the 4G network is not found or the 4G network makes a rejection), the mobile phone continues to search for a 3G network in the region A by using the SIM card to attempt network registration; and so on, until a 2G network. As such, the mobile phone with the card in arrears continuously attempts network search and registration in the region A. Therefore, power consumption of the mobile phone is relatively high.

To resolve the foregoing technical problem, in the embodiments of this application, when an electronic device is in a power-on state, the electronic device may determine whether the electronic device has registered with a network (that is, has successfully registered with a network). In a case that the electronic device has not registered with a network, the electronic device determines whether the electronic device is rejected by a 2G network or a 3G network. In a case that the electronic device is not rejected by the 2G network or the 3G network, the electronic device continues to determine whether the electronic device is rejected by a 4G network or a 5G network. If the electronic device is rejected by the 4G network or the 5G network, the electronic device determines, based on a quantity of times of being rejected by the 4G network or the 5G network, whether a SIM card of the electronic device is an abnormal card, to perform a registration-related operation. For example, if a determining result indicates an abnormal card, only an emergency service is allowed to be executed within preset duration, and network registration is not performed within the preset duration.

In this solution, the electronic device may determine whether the SIM card is rejected by a network on the 2G network or the 3G network to determine that a region in which the electronic device is located currently is covered by a first network. To be specific, in a case that the SIM card is not rejected by the first network, it is determined that the region in which the electronic device is located currently is not covered by the first network. In addition, whether the SIM card is rejected by a second network is determined to determine whether the SIM card is an abnormal card. To be specific, in a case that the SIM card is rejected by the second network, it is determined that the region in which the electronic device is located currently is not a region without network coverage, but rejection is caused due to an anomaly of the SIM card. Thus, in a case that there is no coverage of the first network and the SIM card is an abnormal card, a registration-related operation is performed based on a quantity of times of being rejected by the second network. In other words, a network registration process of the SIM card is performed. Therefore, the abnormal card located in a region covered by the second network is prevented from keeping attempting registration with a network. Thus, this solution can reduce a quantity of unnecessary network registration times of the abnormal card of the electronic device, reduce power consumption of the electronic device, and improve a battery life of the electronic device.

The network registration method provided in the embodiments of this application may be performed by an electronic device, a functional module or entity in an electronic device, or a network registration apparatus. The technical solutions provided in the embodiments of this application are described below by using an example in which the electronic device performs the network registration method.

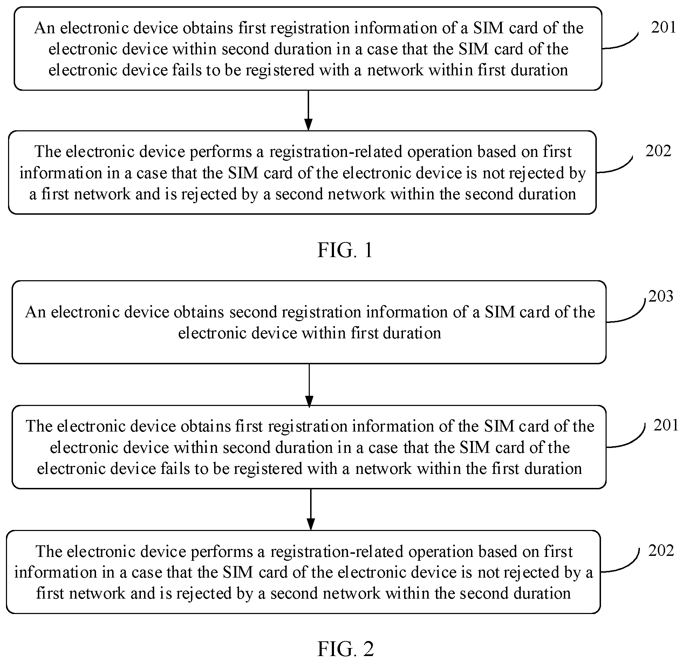

An embodiment of this application provides a network registration method. FIG. 1 shows a flowchart of a network registration method according to an embodiment of this application. As shown in FIG. 1, the network registration method provided in this embodiment of this application may include the following step 201 and step 202.

Step 201: An electronic device obtains first registration information of a SIM card of the electronic device within second duration in a case that the SIM card of the electronic device fails to be registered with a network within first duration.

In this embodiment of this application, the first registration information represents whether the SIM card of the electronic device is rejected by a first network and a second network within the second duration.

In this embodiment of this application, when the electronic device is in a power-on state, the electronic device may detect whether the SIM card of the electronic device is successfully registered with a network within the first duration. The network includes a first network and a second network.

Optionally, in this embodiment of this application, the first network may include but is not limited to at least one of the following: a 2G network and a 3G network.

Optionally, in this embodiment of this application, the second network may include but is not limited to at least one of the following: a 4G network and a 5G network.

Optionally, in this embodiment of this application, with reference to FIG. 1, as shown in FIG. 2, before step 201, the network registration method provided in this embodiment of this application further includes the following step 203.

Step 203: The electronic device obtains second registration information of the SIM card of the electronic device within the first duration.

In this embodiment of this application, the second registration information represents whether the SIM card of the electronic device is successfully registered with a network within the first duration.

Optionally, in this embodiment of this application, the first duration may be system default duration of the electronic device, or may be duration predefined by a user.

Optionally, in a case, when the SIM card of the electronic device is registered with a network, if the SIM card is rejected by the first network, the SIM card fails to be registered with the first network, that is, the SIM card is not successfully registered with the first network; and if the SIM card is rejected by the second network, the SIM card fails to be registered with the second network, that is, the SIM card is not successfully registered with the second network.

In another case, when the SIM card of the electronic device is registered with a network, if the electronic device does not find any network (for example, the first network or the second network), the SIM card fails to be registered, that is, the SIM card is not successfully registered with any network.

Optionally, in this embodiment of this application, in a case that the SIM card of the electronic device is successfully registered with the first network or the second network, the electronic device executes a normal service, for example, performs network search and registration.

In this embodiment of this application, the electronic device determines whether the SIM card of the electronic device is successfully registered with a network within the first duration, to prevent interference from a temporary pseudo base station. To be specific, if network registration is successful before, when a rejection from a network is determined subsequently, whether the rejection is from the second network or the pseudo base station cannot be accurately determined. Therefore, effectiveness of subsequent network registration optimization is improved.

Optionally, in this embodiment of this application, the electronic device includes at least one SIM card, and the SIM card may include at least one of the following cases:

A global system for mobile communications (Global System for Mobile Communication, GSM) card in arrears is inserted in a GSM network decommissioned region.

A GSM card in arrears is inserted in a GSM network decommissioned version of the electronic device.

A code division multiple access (Code Division Multiple Access, CDMA) card in arrears is inserted in a CDMA network decommissioned region.

A universal mobile telecommunications system (Universal Mobile Telecommunications System, UMTS) card in arrears is inserted in a place without UMTS coverage or in a UMTS network decommissioned region.

The SIM card roams abroad without activation of a roaming protocol.

Step 202: The electronic device performs a registration-related operation based on first information in a case that the SIM card of the electronic device is not rejected by the first network and is rejected by the second network within the second duration.

In this embodiment of this application, the first information includes a quantity of times that the SIM card of the electronic device is rejected by the second network during network registration.

In this embodiment of this application, if the SIM card of the electronic device is not rejected by the first network, it may be considered that a region in which the electronic device is located currently is not covered by the first network. Therefore, the SIM card of the electronic device has no opportunity to become an invalid (invalid) card. If the electronic device is rejected by the second network, it may be considered that the region in which the electronic device is located currently is not a region without network coverage, but a region covered by the second network. Therefore, the rejection is caused due to an anomaly of the SIM card. In other words, the SIM card of the electronic device is an abnormal card.

Optionally, in this embodiment of this application, the second duration may be a system default time period of the electronic device, or may be a time period predefined by a user.

It should be noted that the quantity of times of being rejected by the second network refers to a total quantity of times of being rejected by the second network accumulated when the electronic device registers with the second network within the second duration (which is a preset historical time period).

Optionally, in this embodiment of this application, that the region in which the electronic device is located currently is not covered by the first network includes at least one of not being covered by a 2G network and not being covered by a 3G network.

Optionally, in this embodiment of this application, the region covered by the second network may include at least one of a region covered by a 4G network and a region covered by a 5G network.

Optionally, in this embodiment of this application, when the electronic device registers with a network, a SIM card rejected by the first network by using a serious cause value may be referred to as an invalid card.

Optionally, in this embodiment of this application, the serious cause value may include at least one of the following: a cause value #2 and a cause value #7.

The cause value #2 represents that an international mobile subscriber identity (International Mobile Subscriber Identity, IMSI) of a terminal is unknown in a home location register (Home Location Register, HLR) of a network (which is denoted as IMSI unknown in HLR). Generally, the terminal is not defined in the HLR of the network.

The cause value #7 represents that a terminal is not allowed to use a general packet radio service (general packet radio service) service (which is denoted as GPRS services not allowed).

Optionally, in this embodiment of this application, the abnormal card may be a card that is rejected by the second network by using a moderate cause value when a SIM card loaded in the electronic device is registered with a network. For example, the SIM card may be a card in arrears or a card without roaming activated.

Optionally, in this embodiment of this application, the moderate cause value may include a cause value #15. The cause value #15 represents that a circuit switched (Circuit Switched, CS) domain is abnormal or a CS domain is unavailable (which is denoted as CS domain not available).

Optionally, in this embodiment of this application, the registration-related operation may be prohibiting or allowing the SIM card of the electronic device to perform network search and registration.

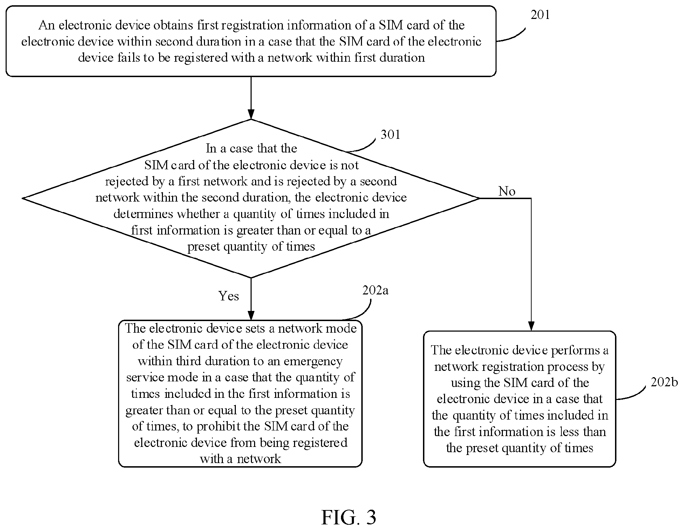

Optionally, in this embodiment of this application, with reference to FIG. 1, as shown in FIG. 3, after step 201 and before "the electronic device performs the registration-related operation based on the first information" in step 202, the network registration method provided in this embodiment of this application further includes the following step 301. In addition, step 202 is specifically implemented by using the following step 202a or step 202b.

Step 301: In the case that the SIM card of the electronic device is not rejected by the first network and is rejected by the second network within the second duration, the electronic device determines whether the quantity of times included in the first information is greater than or equal to a preset quantity of times.

Step 202a: The electronic device sets a network mode of the SIM card of the electronic device within third duration to an emergency service mode in a case that the quantity of times included in the first information is greater than or equal to the preset quantity of times, to prohibit the SIM card of the electronic device from being registered with a network.

Optionally, in this embodiment of this application, the preset quantity of times may be a system default quantity-of-times threshold, or may be a user-defined quantity-of-times threshold.

Optionally, in this embodiment of this application, the third duration may be system default duration, or may be user-defined duration. For example, the duration is within one hour.

It should be noted that, the emergency service mode may be understood as follows: A network permission set by the electronic device for the SIM card is that only an emergency service is provided for the SIM card within the third duration, so that the SIM card does not continuously search for a network for registration, that is, the SIM card is prohibited from being registered with a network within the third duration. In other words, in this case, the electronic device does not attempt to initiate a registration procedure and does not perform network search and registration.

Optionally, in this embodiment of this application, the emergency service may include but is not limited to at least one of the following: an emergency call service, an emergency SMS service, an emergency positioning service, an emergency regional alarm service, and the like.

Optionally, in this embodiment of this application, the electronic device may start a timer of the electronic device, and start timing by using the timer, to set the network mode of the SIM card to the emergency service mode within the third duration after the timer is started.

It should be noted that, in the emergency service mode, the electronic device may execute an emergency service. The emergency service can be implemented by finding a network that supports the emergency service and camping on the network, without a need to successfully register with the network.

For example, if the SIM card of the electronic device is rejected by 4G/5G of an operator and is not rejected by GSM, and no normal service is obtained after startup, only an emergency service needs to be provided within a period of time (for example, 1 hour). In this case, if a CDMA signal is found, emergency camping may be performed on CDMA, emergency camping may be performed on wideband code division multiple access (Wide band Code Division Multiple Access, WCDMA), or emergency camping may be performed on 4G/5G (provided that 4G/5G supports the emergency camping). Once emergency camping is performed, network search and registration are not performed within the period of time.

Optionally, in this embodiment of this application, after step 202a, the network registration method provided in this embodiment of this application further includes the following step 302.

Step 302: The electronic device clears the quantity of times of being rejected by the second network that is recorded by the electronic device and exits the emergency service mode after the third duration, to perform a network registration process by using the SIM card of the electronic device.

It may be understood that, after the third duration since the timer is started, the electronic device may clear the recorded accumulated total quantity of times of being rejected by the second network, and start to recount a quantity of times of being rejected by the second network in this case.

In this embodiment of this application, after exiting the emergency service mode, the electronic device sets the network permission of the SIM card to allowing to register the SIM card of the electronic device with a network. In other words, in this case, the electronic device may attempt to initiate a registration procedure, that is, normally perform network search and registration.

In this embodiment of this application, after the timer expires (that is, after the third duration since the timer is started), the electronic device may continue to execute a normal service. If the second network makes a rejection again, and the first network makes no rejection, the electronic device may perform step 201 and step 202 and related solutions thereof again. For example, in a case that the quantity of times of being rejected by the second network is greater than or equal to the preset quantity of times, the electronic device is allowed to execute an emergency service within preset duration.

In this embodiment of this application, after the third duration, the electronic device may clear the quantity of times of being rejected by the second network that is recorded by the electronic device, so that the SIM card of the electronic device can execute a normal service, that is, initiate a network registration procedure. In addition, if the second network makes a rejection again, and the first network makes no rejection, the electronic device may recount the quantity of times of being rejected by the second network, and the quantity of times is not affected by a historical quantity of times of being rejected by the second network, so that the SIM card of the electronic device performs a registration-related operation more accurately.

Step 202b: The electronic device performs a network registration process by using the SIM card of the electronic device in a case that the quantity of times included in the first information is less than a preset quantity of times.

In this embodiment of this application, the electronic device may determine, based on the quantity of times included in the first information, whether the electronic device is allowed to register with a network. To be specific, when the quantity of times of being rejected by the second network is less than the preset quantity of times, the electronic device executes a normal service; or when the quantity of times of being rejected by the second network is greater than or equal to the preset quantity of times, the electronic device does not execute a normal service, but executes an emergency service. While ensuring that the electronic device can execute an emergency service in an emergency situation, a quantity of unnecessary network registration times is reduced, and power consumption of the electronic device is reduced.

According to the network registration method provided in this embodiment of this application, in the case that the SIM card of the electronic device fails to be registered with a network, the electronic device may determine whether the SIM card is rejected by the first network to determine whether a region in which the electronic device is located currently is covered by the first network. To be specific, in a case that the SIM card is not rejected by the first network, it is determined that the region in which the electronic device is located currently is not covered by the first network. In addition, the electronic device determines whether the SIM card is rejected by the second network to determine whether the SIM card is an abnormal card. To be specific, in a case that the SIM card is rejected by the second network, it is determined that the region in which the electronic device is located currently is not a region without network coverage, but rejection is caused due to an anomaly of the SIM card. Thus, in a case that there is no coverage of the first network and the SIM card is an abnormal card, the electronic device performs the registration-related operation based on the quantity of times of being rejected by the second network. In other words, a network registration process of the SIM card is performed. Therefore, the abnormal card located in a region covered by the second network is prevented from keeping attempting registration with a network. Thus, this solution can reduce a quantity of unnecessary network registration times of the abnormal card of the electronic device, reduce power consumption of the electronic device, and improve a battery life of the electronic device.

Optionally, in this embodiment of this application, after step 201, the network registration method provided in this embodiment of this application further includes the following step 401.

Step 401: Set a network mode of the SIM card of the electronic device within fourth duration to an emergency service mode in a case that the SIM card of the electronic device is rejected by the first network within the second duration, to prohibit the SIM card of the electronic device from being registered with a network.

It may be understood that, in a case that a region in which the electronic device is located currently is covered by the first network, the first network may reject the SIM card of the electronic device by using a serious cause value. After a plurality of rejections, the SIM card becomes an invalid card, and does not continue to search for a network for registration subsequently.

Optionally, in this embodiment of this application, the fourth duration may be system default duration, or may be user-defined duration. For example, the duration is within one hour.

In this embodiment of this application, in a case that the electronic device is rejected by the first network, the electronic device can provide only an emergency service, to prevent the electronic device from registering with a network. It should be noted that, in this case, whether the electronic device is rejected by the second network or is not rejected by the second network does not affect a service permission of the electronic device. In other words, the electronic device can provide only an emergency service.

Optionally, in this embodiment of this application, in a case that the electronic device is not rejected by the first network and is not rejected by the second network, the electronic device can execute a normal service, that is, normally perform network search and registration.

It should be noted that an execution relationship between step 401 and step 202 is an "or" relationship. To be specific, step 401 is not performed in a case that step 202 is performed, or step 202 is not performed in a case that step 401 is performed.

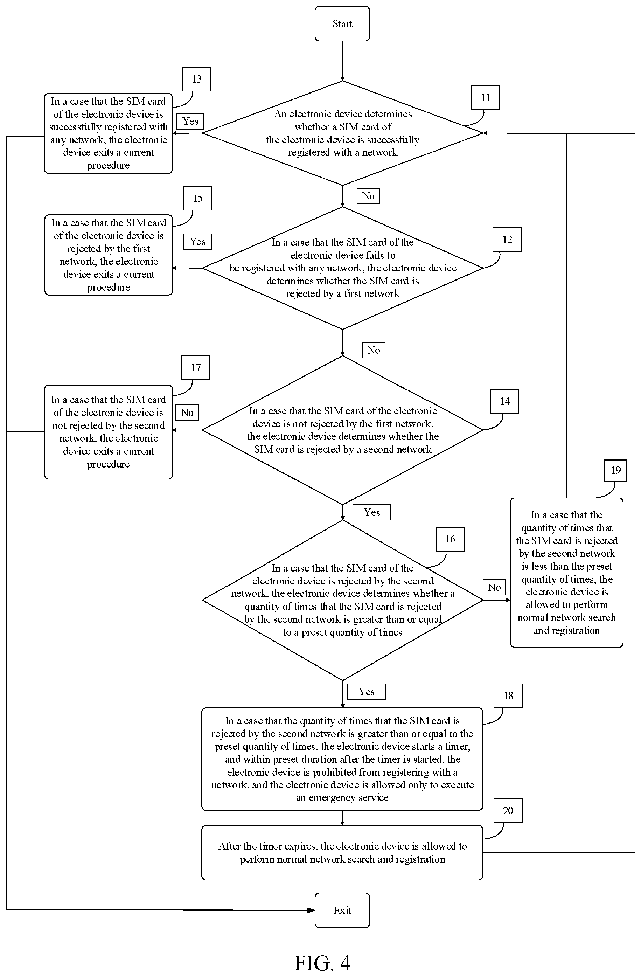

An entire procedure of a network registration method provided in an embodiment of this application is illustrated below by using a specific implementation process. As shown in FIG. 4, the procedure of the network registration method provided in this embodiment of this application includes the following step 11 to step 20.

Step 11: An electronic device determines whether a SIM card of the electronic device is successfully registered with a network.

The network herein may include a first network and a second network.

Step 12: In a case that the SIM card of the electronic device fails to be registered with any network, the electronic device determines whether the SIM card is rejected by the first network.

Step 13: In a case that the SIM card of the electronic device is successfully registered with any network, the electronic device exits a current procedure.

It should be noted that exiting the current procedure in this embodiment of this application means that the electronic device can execute a normal service, for example, a network search and registration service.

Step 14: In a case that the SIM card of the electronic device is not rejected by the first network, the electronic device determines whether the SIM card is rejected by the second network.

Step 15: In a case that the SIM card of the electronic device is rejected by the first network, the electronic device exits a current procedure.

Step 16: In a case that the SIM card of the electronic device is rejected by the second network, the electronic device determines whether a quantity of times that the SIM card is rejected by the second network is greater than or equal to a preset quantity of times.

Step 17: In a case that the SIM card of the electronic device is not rejected by the second network, the electronic device exits a current procedure.

Step 18: In a case that the quantity of times that the SIM card is rejected by the second network is greater than or equal to the preset quantity of times, the electronic device starts a timer, and within preset duration after the timer is started, the electronic device is prohibited from registering with a network, and the electronic device is allowed only to execute an emergency service.

Step 19: In a case that the quantity of times that the SIM card is rejected by the second network is less than the preset quantity of times, the electronic device is allowed to perform normal network search and registration.

Step 20: After the timer expires, the electronic device is allowed to perform normal network search and registration.

In this embodiment of this application, after step 19 is performed, that is, after the electronic device is allowed to perform normal network search and registration, the electronic device may continue to determine whether the SIM card is successfully registered with a network. In other words, the electronic device may continue to perform the steps of the network registration method in this application, that is, perform step 11 to step 20 again. Similarly, after step 20, the steps of the network registration method in this application may also continue to be performed, that is, step 11 to step 20 are performed again.

It should be noted that for related descriptions in step 11 to step 20, refer to the descriptions in the foregoing embodiments. Details are not described herein again.

The foregoing method embodiments or various possible implementations in the foregoing method embodiments may be separately performed, or any two or more embodiments or implementations may be performed in combination with each other. This may be specifically determined based on an actual use requirement. This is not limited in the embodiments of this application.

It should be noted that the network registration method provided in the embodiments of this application may be performed by an electronic device or a network registration apparatus. In the embodiments of this application, an example in which the network registration apparatus performs the network registration method is used to describe the network registration apparatus provided in the embodiments of this application.

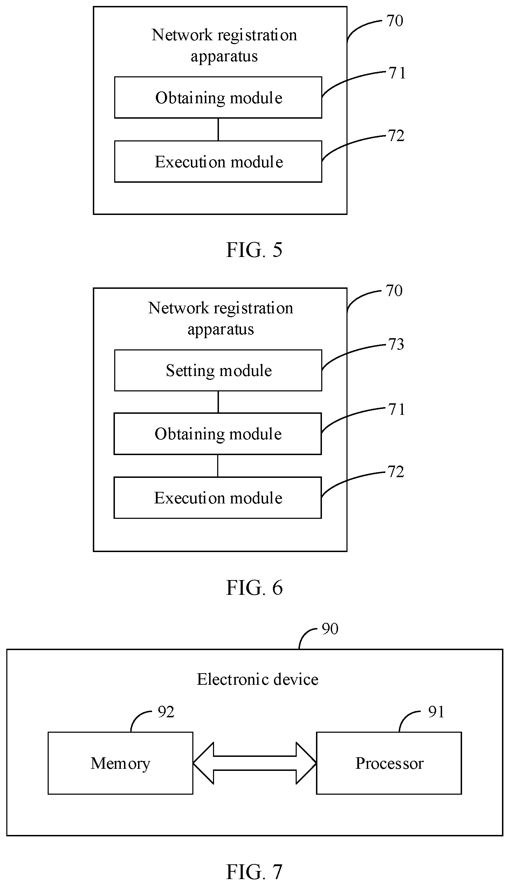

FIG. 5 shows a schematic diagram of a possible structure of a network registration apparatus according to an embodiment of this application. As shown in FIG. 5, the network registration apparatus 70 may include an obtaining module 71 and an execution module 72.

The obtaining module 71 is configured to obtain first registration information of a SIM card of an electronic device within second duration in a case that the SIM card of the electronic device fails to be registered with a network within first duration, where the first registration information represents whether the SIM card of the electronic device is rejected by a first network and a second network within the second duration. The execution module 72 is configured to perform a registration-related operation based on first information in a case that the first registration information obtained by the obtaining module 71 represents that the SIM card of the electronic device is not rejected by the first network and is rejected by the second network within the second duration, where the first information includes a quantity of times that the SIM card of the electronic device is rejected by the second network during network registration.

This embodiment of this application provides the network registration apparatus. In the case that the SIM card fails to be registered with a network, the network registration apparatus may determine whether the SIM card is rejected by the first network to determine whether a region in which the network registration apparatus is located currently is covered by the first network. To be specific, in a case that the SIM card is not rejected by the first network, it is determined that the region in which the network registration apparatus is located currently is not covered by the first network. In addition, whether the SIM card is rejected by the second network is determined to determine whether the SIM card is an abnormal card. To be specific, in a case that the SIM card is rejected by the second network, it is determined that the region in which the network registration apparatus is located currently is not a region without network coverage, but rejection is caused due to an anomaly of the SIM card. Thus, in a case that there is no coverage of the first network and the SIM card is an abnormal card, the network registration apparatus may perform the registration-related operation based on the quantity of times of being rejected by the second network. In other words, a network registration process of the SIM card is performed. Therefore, the abnormal card located in a region covered by the second network is prevented from keeping attempting registration with a network. Thus, this solution can reduce a quantity of unnecessary network registration times of the abnormal card, reduce power consumption of the network registration apparatus, and improve a battery life of the network registration apparatus.

In an implementation, the obtaining module 71 is further configured to: before obtaining the first registration information of the SIM card of the electronic device within the second duration in the case that the SIM card of the electronic device fails to be registered with a network within the first duration, obtain second registration information of the SIM card of the electronic device within the first duration, where the second registration information represents whether the SIM card of the electronic device is successfully registered with a network within the first duration.

In an implementation, the execution module 72 is specifically configured to:
set a network mode of the SIM card of the electronic device within third duration to an emergency service mode in a case that the quantity of times included in the first information is greater than or equal to a preset quantity of times, to prohibit the SIM card of the electronic device from being registered with a network;
   or
perform a network registration process by using the SIM card of the electronic device in a case that the quantity of times included in the first information is less than a preset quantity of times.

In an implementation, the execution module 72 is further configured to: after setting the network mode of the SIM card of the electronic device within the third duration to the emergency service mode to prohibit the SIM card of the electronic device from being registered with a network, clear the quantity of times of being rejected by the second network that is recorded by the electronic device and exit the emergency service mode after the third duration, to perform a network registration process by using the SIM card of the electronic device.

In an implementation, with reference to FIG. 5, as shown in FIG. 6, the network registration apparatus 70 provided in this embodiment of this application further includes a setting module 73. The setting module 73 is configured to: after the obtaining module 71 obtains the first registration information of the SIM card of the electronic device within the second duration, set a network mode of the SIM card of the electronic device within fourth duration to an emergency service mode in a case that the SIM card of the electronic device is rejected by the first network within the second duration, to prohibit the SIM card of the electronic device from being registered with a network.

The network registration apparatus in this embodiment of this application may be an electronic device, or may be a component such as an integrated circuit or a chip in an electronic device. The electronic device may be a terminal, or may be a device other than the terminal. For example, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook or a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in this embodiment of this application.

The network registration apparatus in this embodiment of this application may be an apparatus having an operating system. The operating system may be an Android (Android) operating system, may be an iOS operating system, or may be another possible operating system. This is not specifically limited in this embodiment of this application.

The network registration apparatus provided in this embodiment of this application can implement the processes implemented in the foregoing method embodiments. To avoid repetition, details are not described herein again.

Optionally, as shown in FIG. 7, an embodiment of this application further provides an electronic device 90, including a processor 91 and a memory 92. The memory 92 stores a program or instructions that are executable on the processor 91. When the program or the instructions are executed by the processor 91, the steps of the foregoing network registration method embodiment are implemented, and a same technical effect can be achieved. To avoid repetition, details are not described herein again.

It should be noted that the electronic device in this embodiment of this application includes the foregoing mobile electronic device and a non-mobile electronic device.

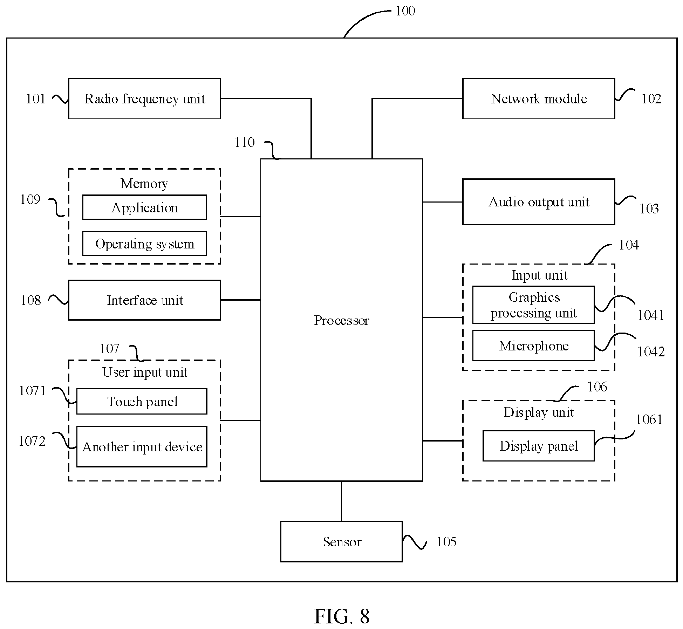

FIG. 8 is a schematic diagram of a hardware structure of an electronic device for implementing an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply (for example, a battery) that supplies power to each component, and the power supply may be logically connected to the processor 110 by using a power management system, to implement functions such as charging management, discharging management, and power consumption management by using the power management system. The structure of the electronic device shown in FIG. 8 constitutes no limitation on the electronic device. The electronic device may include more or fewer components than those shown in the figure, or combine some components, or have different component arrangements. Details are not described herein again.

The processor 110 is configured to: obtain first registration information of a SIM card of an electronic device within second duration in a case that the SIM card of the electronic device fails to be registered with a network within first duration, where the first registration information represents whether the SIM card of the electronic device is rejected by a first network and a second network within the second duration; and perform a registration-related operation based on first information in a case that the SIM card of the electronic device is not rejected by the first network and is rejected by the second network within the second duration, where the first information includes a quantity of times that the SIM card of the electronic device is rejected by the second network during network registration.

This embodiment of this application provides the electronic device. In the case that the SIM card of the electronic device fails to be registered with a network, the electronic device may determine whether the SIM card is rejected by the first network to determine whether a region in which the electronic device is located currently is covered by the first network. To be specific, in a case that the SIM card is not rejected by the first network, it is determined that the region in which the electronic device is located currently is not covered by the first network. In addition, the electronic device determines whether the SIM card is rejected by the second network to determine whether the SIM card is an abnormal card. To be specific, in a case that the SIM card is rejected by the second network, it is determined that the region in which the electronic device is located currently is not a region without network coverage, but rejection is caused due to an anomaly of the SIM card. Thus, in a case that there is no coverage of the first network and the SIM card is an abnormal card, the electronic device performs the registration-related operation based on the quantity of times of being rejected by the second network. In other words, a network registration process of the SIM card is performed. Therefore, the abnormal card located in a region covered by the second network is prevented from keeping attempting registration with a network. Thus, this solution can reduce a quantity of unnecessary network registration times of the abnormal card of the electronic device, reduce power consumption of the electronic device, and improve a battery life of the electronic device.

Optionally, in this embodiment of this application, the processor 110 is further configured to: before obtaining the first registration information of the SIM card of the electronic device within the second duration in the case that the SIM card of the electronic device fails to be registered with a network within the first duration, obtain second registration information of the SIM card of the electronic device within the first duration, where the second registration information represents whether the SIM card of the electronic device is successfully registered with a network within the first duration.

Optionally, in this embodiment of this application, the processor 110 is specifically configured to:
set a network mode of the SIM card of the electronic device within third duration to an emergency service mode in a case that the quantity of times included in the first information is greater than or equal to a preset quantity of times, to prohibit the SIM card of the electronic device from being registered with a network;
   or
perform a network registration process by using the SIM card of the electronic device in a case that the quantity of times included in the first information is less than a preset quantity of times.

Optionally, in this embodiment of this application, the processor 110 is further configured to: after setting the network mode of the SIM card of the electronic device within the third duration to the emergency service mode to prohibit the SIM card of the electronic device from being registered with a network, clear the quantity of times of being rejected by the second network that is recorded by the electronic device and exit the emergency service mode after the third duration, to perform a network registration process by using the SIM card of the electronic device.

Optionally, in this embodiment of this application, the processor 110 is further configured to: after obtaining the first registration information of the SIM card of the electronic device within the second duration, set a network mode of the SIM card of the electronic device within fourth duration to an emergency service mode in a case that the SIM card of the electronic device is rejected by the first network within the second duration, to prohibit the SIM card of the electronic device from being registered with a network.

The electronic device provided in this embodiment of this application can implement the processes implemented in the foregoing method embodiments, and a same technical effect can be achieved. To avoid repetition, details are not described herein again.

For beneficial effects of various implementations in this embodiment, refer to the beneficial effects of the corresponding implementations in the foregoing method embodiments. To avoid repetition, details are not described herein again.

It should be understood that in this embodiment of this application, the input unit 104 may include a graphics processing unit (Graphics Processing Unit, GPU) 1041 and a microphone 1042. The graphics processing unit 1041 processes image data of a still picture or a video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a function key (such as a volume control key or an on/off key), a trackball, a mouse, and a joystick. Details are not described herein.

The memory 109 may be configured to store a software program and various data. The memory 109 may mainly include a first storage area for storing a program or instructions and a second storage area for storing data, where the first storage area may store an operating system, an application program or instructions required by at least one function (such as a sound play function or an image play function), and the like. In addition, the memory 109 may include a volatile memory or a nonvolatile memory, or the memory 109 may include both a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 in this embodiment of this application includes but is not limited to these memories and any other suitable type of memory.

The processor 110 may include one or more processing units. Optionally, the processor 110 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 110.

An embodiment of this application further provides a readable storage medium, where the readable storage medium stores a program or instructions, the program or instructions are executed by a processor to implement the processes in the foregoing network registration method embodiment, and same technical effects can be achieved. To avoid repetition, details are not described herein again.

The processor is a processor in the electronic device in the foregoing embodiments. The readable storage medium includes a computer-readable storage medium such as a computer read-only memory ROM, a random access memory RAM, a magnetic disk, or an optical disc.

An embodiment of this application further provides a chip, where the chip includes a processor and a communication interface, the communication interface is coupled to the processor, the processor is configured to execute a program or instructions to implement the processes in the foregoing network registration method embodiment, and same technical effects can be achieved. To avoid repetition, details are not described herein again.

It should be understood that, the chip mentioned in this embodiment of this application may also be referred to as a system-level chip, a system chip, a chip system, or a system on chip.

An embodiment of this application provides a computer program product. The program product is stored in a storage medium. The program product is executed by at least one processor to implement the processes in the foregoing network registration method embodiment, and same technical effects can be achieved. To avoid repetition, details are not described herein again.

It should be noted that in this specification, the term "include", "comprise", or any of their variants is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples may be combined in other examples.

According to the foregoing descriptions of the implementations, a person skilled in the art can clearly understand that the method in the foregoing embodiments can be implemented by software and a necessary general-purpose hardware platform, or certainly can be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from principles of this application and the protection scope of the claims, and all such manners fall within the protection scope of this application.

## Claims

1. A network registration method, wherein the method comprises:
obtaining first registration information of a subscriber identity module SIM card of an electronic device within second duration in a case that the SIM card of the electronic device fails to be registered with a network within first duration, wherein the first registration information represents whether the SIM card of the electronic device is rejected by a first network and a second network within the second duration; and
performing a registration-related operation based on first information in a case that the SIM card of the electronic device is not rejected by the first network and is rejected by the second network within the second duration, wherein the first information comprises a quantity of times that the SIM card of the electronic device is rejected by the second network during network registration.

2. The method according to claim 1, wherein before the obtaining first registration information of a SIM card of an electronic device within second duration in a case that the SIM card of the electronic device fails to be registered with a network within first duration, the method further comprises:
obtaining second registration information of the SIM card of the electronic device within the first duration, wherein the second registration information represents whether the SIM card of the electronic device is successfully registered with a network within the first duration.

3. The method according to claim 1 or 2, wherein the performing a registration-related operation based on first information comprises:
setting a network mode of the SIM card of the electronic device within third duration to an emergency service mode in a case that the quantity of times comprised in the first information is greater than or equal to a preset quantity of times, to prohibit the SIM card of the electronic device from being registered with a network;
or
performing a network registration process by using the SIM card of the electronic device in a case that the quantity of times comprised in the first information is less than a preset quantity of times.

4. The method according to claim 3, wherein after the setting a network mode of the SIM card of the electronic device within third duration to an emergency service mode, to prohibit the SIM card of the electronic device from being registered with a network, the method further comprises:
clearing the quantity of times of being rejected by the second network that is recorded by the electronic device and exiting the emergency service mode after the third duration, to perform a network registration process by using the SIM card of the electronic device.

5. The method according to claim 1, wherein after the obtaining first registration information of a SIM card of an electronic device within second duration, the method further comprises:
setting a network mode of the SIM card of the electronic device within fourth duration to an emergency service mode in a case that the SIM card of the electronic device is rejected by the first network within the second duration, to prohibit the SIM card of the electronic device from being registered with a network.

6. A network registration apparatus, wherein the apparatus comprises an obtaining module and an execution module;
the obtaining module is configured to obtain first registration information of a subscriber identity module SIM card of an electronic device within second duration in a case that the SIM card of the electronic device fails to be registered with a network within first duration, wherein the first registration information represents whether the SIM card of the electronic device is rejected by a first network and a second network within the second duration; and
the execution module is configured to perform a registration-related operation based on first information in a case that the SIM card of the electronic device is not rejected by the first network and is rejected by the second network within the second duration, wherein the first information comprises a quantity of times that the SIM card of the electronic device is rejected by the second network during network registration.

7. The apparatus according to claim 6, wherein the obtaining module is further configured to: before obtaining the first registration information of the SIM card of the electronic device within the second duration in the case that the SIM card of the electronic device fails to be registered with a network within the first duration, obtain second registration information of the SIM card of the electronic device within the first duration, wherein the second registration information represents whether the SIM card of the electronic device is successfully registered with a network within the first duration.

8. The apparatus according to claim 6 or 7, wherein the execution module is specifically configured to:
set a network mode of the SIM card of the electronic device within third duration to an emergency service mode in a case that the quantity of times comprised in the first information is greater than or equal to a preset quantity of times, to prohibit the SIM card of the electronic device from being registered with a network;
or
perform a network registration process by using the SIM card of the electronic device in a case that the quantity of times comprised in the first information is less than a preset quantity of times.

9. The apparatus according to claim 8, wherein the execution module is further configured to: after setting the network mode of the SIM card of the electronic device within the third duration to the emergency service mode to prohibit the SIM card of the electronic device from being registered with a network, clear the quantity of times of being rejected by the second network that is recorded by the electronic device and exit the emergency service mode after the third duration, to perform a network registration process by using the SIM card of the electronic device.

10. The apparatus according to claim 6, wherein the apparatus further comprises a setting module; and
the setting module is configured to: after the obtaining module obtains the first registration information of the SIM card of the electronic device within the second duration, set a network mode of the SIM card of the electronic device within fourth duration to an emergency service mode in a case that the SIM card of the electronic device is rejected by the first network within the second duration, to prohibit the SIM card of the electronic device from being registered with a network.

11. An electronic device, comprising a processor and a memory, wherein the memory stores a program or instructions that are executable on the processor, and when the program or the instructions are executed by the processor, steps of the network registration method according to any one of claims 1 to 5 are implemented.

12. A readable storage medium, wherein the readable storage medium stores a program or instructions, and when the program or the instructions are executed by a processor, steps of the network registration method according to any one of claims 1 to 5 are implemented.

13. A chip, wherein the chip comprises a processor and a communication interface, the communication interface is coupled to the processor, and the processor is configured to execute a program or instructions to implement the method according to any one of claims 1 to 5.

14. A computer program product, wherein the program product is executed by at least one processor to implement the method according to any one of claims 1 to 5.

15. An electronic device, wherein the electronic device is configured to perform the method according to any one of claims 1 to 5.
